# FASCICULE DE BREVET EUROPEEN

(11) **EP 2 789 477 B1**
(45) Date de publication et mention de la délivrance du brevet: **23.09.2015**
(21) Numéro de dépôt: 14162039.3
(22) Date de dépôt: 27.03.2014
(51) Int. Cl.: B60C 11/03, B60C 7/12, B60C 7/24

(54) **Pneumatique pour machines agricoles**
Reifen für Landwirtschaftsmaschinen
Tyre for farming machines

(30) Priorité: 12.04.2013 FR 1353332
(43) Date de publication de la demande: 15.10.2014
(73) Titulaire: OTICO, 77650 Chalmaison (FR)
(72) Inventeur: Phely, Olivier, 77520 Thenisy (FR); Piou, Denis, 89340 Villeblevin (FR)
(74) Mandataire: Cabinet Netter

(56) Documents cités:
- FR-A- 438 929
- FR-A1- 2 933 903
- US-A- 1 342 562

## Description

L'invention concerne un pneumatique semi-creux destiné aux machines agricoles et en particulier aux semoirs.

Elle vise principalement un pneumatique semi-creux destiné à une machine agricole pour assurer la fermeture d'un sillon préalablement créé par un outil de travail du sol.

Dans les machines agricoles de ce type, un outil de travail du sol tel qu'un soc, un disque ou une dent vient créer un sillon dans lequel des graines ou semences sont enfouies, le sillon étant ensuite refermé pour permettre la germination des graines ou semences.

Un tel outil de travail peut être associé à un élément de semoir ou encore à un autre élément, par exemple un élément assurant la distribution d'un engrais ou fertilisant qui doit être lui aussi enfoui dans le sillon.

Dans tous les cas, se pose le problème de refermer le sillon pour permettre soit la germination des graines ou semences, soit la répartition de l'engrais ou du fertilisant dans le sol.

On connaît, d'après la publication FR 2 933 903 au nom de la Demanderesse, un pneumatique semi-creux présentant un axe de révolution et comprenant une semelle propre à être montée à la périphérie d'un support rotatif, une bande de roulement opposée à la semelle et deux flancs reliant chacun la semelle et la bande de roulement, de manière à former ensemble une enveloppe définissant une chambre non gonflée à l'intérieur du pneumatique. Le support rotatif peut être par exemple une jante de roue.

Ce pneumatique semi-creux présente une bande de roulement de profil convexe et est destiné principalement à équiper une roue pour un élément de semoir, afin de régler la profondeur de travail de cet élément et/ou pour appuyer le sol après le passage de cet élément.

Ce pneumatique connu est monté sur une jante de roue pour constituer une roue destinée à régler la profondeur de travail d'un élément de semoir et/ou pour appuyer le sol après le passage de cet élément.

La fermeture des sillons est généralement assurée par des éléments rotatifs inclinés disposés par paires et dont les plans forment un V.

Il peut s'agir par exemple de disques pleins ou dentés ou encore de roues dentées comme décrit dans le brevet US 5 443 023.

Ces éléments rotatifs connus sont lourds et encombrants et ne parviennent pas toujours à assurer leur fonction de fermeture des sillons de manière efficace dans toutes les conditions du sol.

En effet les sillons à refermer peuvent être formés dans des sols de natures très différentes et dans des conditions climatiques également très différentes.

L'invention se propose de trouver une solution au problème de la fermeture des sillons, sans utiliser de paires d'éléments rotatifs en V.

Elle propose à cet effet un pneumatique semi-creux du type défini précédemment, comme enseigné par la publication FR 2 933 903, qui présente un profil spécial pour permettre d'assurer la fermeture d'un sillon, et cela quelles que soient les conditions de sol ou de terrain rencontrées.

Conformément à l'invention, la bande de roulement présente un profil concave selon un plan passant par l'axe de révolution, et le pneumatique comporte deux crêtes annulaires qui prolongent respectivement les deux flancs dans la direction radiale extérieure et qui se raccordent respectivement à deux extrémités opposées de la bande de roulement. Ces deux crêtes définissent respectivement deux directions principales se coupant suivant un angle aigu, en sorte que lorsque le pneumatique vient au contact du sol en étant soumis à une charge verticale, les deux crêtes se rapprochent localement de manière à exercer un effet de pincement sur le sol, en provoquant une augmentation de la concavité de la bande de roulement et une augmentation de l'angle précité.

Ainsi, l'invention propose un pneumatique semi-creux à profil particulier qui permet d'assurer la fermeture d'un sillon, ce qui n'avait jamais été effectué jusqu'à présent.

Les deux crêtes annulaires, que l'on peut aussi qualifier de nervures annulaires, forment ainsi deux couronnes qui prolongent respectivement les deux flancs au-delà de la bande de roulement.

Comme ces deux crêtes annulaires ont des directions principales qui se coupent suivant un angle aigu, elles se rapprochent mutuellement sous l'effet de la charge en exerçant un effet de pincement sur le sol.

Ce mouvement de rapprochement est permis aussi grâce à la bande de roulement qui possède un profil concave, et non pas un profil convexe comme dans l'art antérieur.

En fait, cette bande de roulement ne constitue pas à proprement parler une bande de roulement, mais une partie déformable qui permet le rapprochement des deux crêtes en provoquant un mouvement de pincement, ce mouvement de pincement étant exercé dans une direction généralement horizontale.

Dans une forme de réalisation préférée de l'invention, chaque flanc et la crête annulaire qui le prolonge sont aptes à pivoter conjointement et localement sous l'effet de la charge verticale autour d'un point de pivotement situé dans une région de raccordement entre le flanc et la semelle.

Autrement dit, sous l'effet de la charge, on obtient à chaque fois un pivotement global du flanc et de la crête annulaire qui le prolonge, ce qui accroît l'effet de pincement et son amplitude.

Dans une première forme de réalisation de l'invention, chaque flanc et la crête annulaire qui le prolonge ont un profil de forme générale convexe, selon un plan passant par l'axe de révolution.

Dans une autre forme de réalisation de l'invention, chaque plan a un profil en forme générale de S selon un plan passant par l'axe de révolution, ce profil en S comportant une partie extérieure convexe se prolongeant par une crête annulaire et une partie intérieure concave reliée à la semelle.

La crête annulaire peut présenter différentes formes.

Dans une première forme de réalisation de l'invention, chaque crête annulaire comporte un bord d'extrémité lisse et continu.

Dans une deuxième forme de réalisation de l'invention, chaque crête annulaire comporte des indentations.

Ces indentations peuvent être réalisées par exemple sous la forme de dents ou de créneaux de forme sensiblement trapézoïdale, ou encore sous forme de picots sensiblement en forme de troncs cylindriques.

Ces indentations peuvent être soit alignées, soit décalées dans des directions parallèles à l'axe de révolution.

La semelle du pneumatique peut présenter différents types de profils en fonction de la nature du support rotatif à la périphérie duquel est monté le pneumatique semi-creux. Ainsi, lorsque le pneumatique est destiné à être monté sur la jante d'une roue, pour former un roue individuelle, la semelle peut présenter un profil de forme concave selon un plan passant par l'axe de révolution et être munie d'un talon de retenue qui fait saillie dans la direction radiale intérieure.

La semelle peut également présenter un profil de forme générale plane selon un plan passant par l'axe de révolution, pour définir un manchon cylindrique.

En ce cas, le pneumatique semi-creux peut être enfilé autour d'un tube cylindrique pour constituer un rouleau ou analogue. Un tel rouleau pourra alors recevoir une pluralité de pneumatiques semi-creux convenablement espacés entre eux pour assurer simultanément la fermeture de plusieurs sillons.

On comprendra que la nature de la semelle ne constitue pas véritablement l'objet de l'invention.

Dans la description qui suit, faite seulement à titre d'exemples, on se réfère aux dessins annexés, sur lesquels :
- la figure 1 est une vue de côté d'un pneumatique semi-creux dans une forme de réalisation de l'invention, dans laquelle les crêtes annulaires ont un bord lisse et continu ;
- la figure 2 est une vue en coupe à échelle agrandie suivant la ligne II-II de la figure 1, la figure faisant apparaître partiellement la jante sur laquelle est monté le pneumatique ;
- la figure 3A est une vue en coupe analogue à la figure 2 montrant le profil du pneumatique à l'état non chargé ;
- la figure 3B est une vue en coupe analogue à la figure 3A montrant le profil du pneumatique à l'état chargé ;
- la figure 4A est une vue en coupe analogue à la figure 3A montrant le pneumatique à l'état non chargé disposé au-dessus d'un sillon à refermer ;
- la figure 4B est une vue analogue à la figure 4A dans laquelle le pneumatique est à l'état chargé pour assurer la fermeture du sillon ;
- la figure 5 est une vue de côté d'un pneumatique semi-creux dans une variante de réalisation dans laquelle les crêtes annulaires ont des indentations non décalées ;
- la figure 6 est une vue en perspective du pneumatique de la figure 5 ;
- la figure 7 est une vue de côté d'un pneumatique semi-creux dans une variante de réalisation dans laquelle les crêtes annulaires ont des indentations décalées ;
- la figure 8 est une vue en perspective du pneumatique de la figure 7 ;
- la figure 9 est une vue de côté d'un pneumatique semi-creux dans une variante de réalisation dans laquelle les indentations sont réalisées sous la forme de picots alignés;
- la figure 10 est une vue en perspective du pneumatique de la figure 9 ;
- la figure 11 est une vue analogue à la figure 10 dans une variante de réalisation dans laquelle les indentations sont réalisées sous la forme de picots décalés ;
- la figure 12 est une vue de face d'un pneumatique semi-creux comportant des flancs à profil en S, des crêtes annulaires à indentations décalées et une semelle en forme de manchon ;
- la figure 13 est une vue en coupe axiale du pneumatique de la figure 12 ;
- la figure 14 est une vue en coupe axiale d'un rouleau équipé de pneumatiques selon les figures 12 et 13 ;
- la figure 15 est une vue de face d'un pneumatique analogue à celui des figures 12 et 13 dans une variante de réalisation où le manchon comporte une hauteur axiale différente ;
- la figure 16 est une vue en coupe axiale du pneumatique de la figure 15 ;
- la figure 17 est une vue de face d'un pneumatique semi-creux comportant des flancs à profil en S, des crêtes annulaires à indentations décalées et une semelle à profil concave ;
- la figure 18 est une vue en coupe axiale du pneumatique de la figure 17 ;
- la figure 19A montre le profil à l'état non chargé du pneumatique de la figure 18 au-dessus d'un sillon ;
- la figure 19B est une vue analogue à la figure 19A dans laquelle le pneumatique est à l'état chargé pour assurer la fermeture du sillon ; et
- la figure 20 est une vue en coupe axiale d'un pneumatique dans une variante de réalisation.

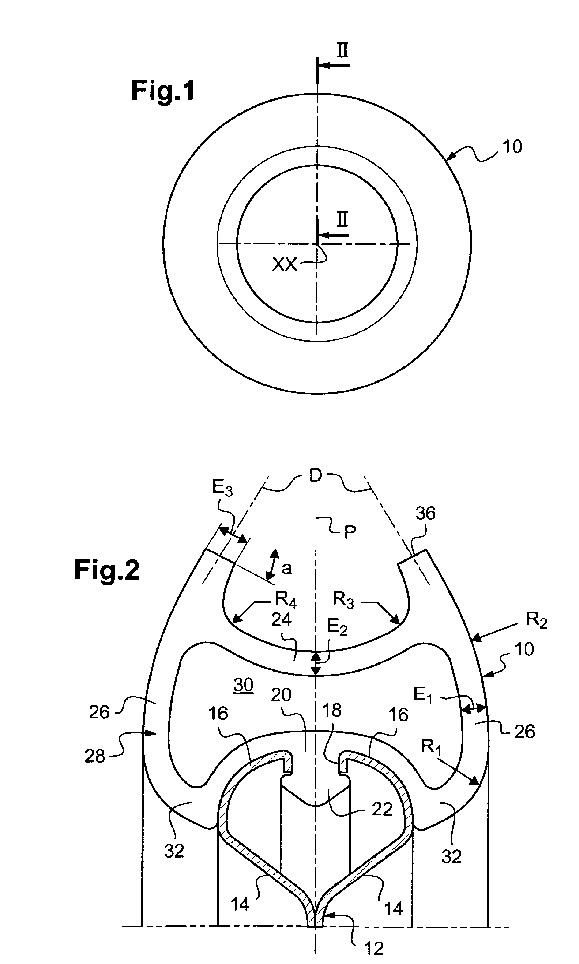

La figure 1 montre en vue de côté un pneumatique 10 de type semi-creux conforme à l'invention, que l'on peut aussi qualifier de bandage. Le pneumatique 10 présente un axe de révolution XX et est destiné à être monté à la périphérie d'un support rotatif, ici une jante de roue (non représentée sur la figure 1).

La figure 2 montre le profil du pneumatique semi-creux, c'est-à-dire la section transversale de ce pneumatique selon un plan passant par l'axe de révolution XX.

Dans cet exemple, le pneumatique est destiné à être monté à la périphérie d'une jante 12 composée de deux flasques 14 présentant deux parties annulaires 16 délimitant entre elles une fente annulaire 18 et formant le siège de la jante. Une telle jante est connue notamment d'après la publication FR 2 933 903 déjà citée.

Le pneumatique semi-creux 10 comprend une semelle 20 de profil concave, destinée à venir épouser la forme des parties annulaires 16 de la jante 12. La semelle 20 se prolonge en son milieu par un talon 22 en forme de T ou de champignon, destiné à être maintenu dans la fente annulaire 18 entre les deux flasques 14. Ces deux flasques 14 sont de préférence démontables pour permettre le montage du pneumatique de manière en soi connue.

La semelle 20 présente ici un profil de forme sensiblement semi-circulaire favorisant un bon enveloppement de la semelle à la périphérie de la jante. La semelle 20 vient ainsi coiffer le siège de la jante.

Le pneumatique semi-creux comprend en outre une bande de roulement 24 de forme concave, disposée à l'opposé de la semelle.

La semelle 20 et la bande de roulement 24 sont reliées par deux flancs 26 qui ont ici un profil convexe. La semelle 20, la bande de roulement 24 et les deux flancs 26 forment ensemble une enveloppe 28 définissant une chambre 30 non gonflée à l'intérieur du pneumatique. Cette enveloppe est réalisée avantageusement dans un matériau élastomère, par exemple en caoutchouc. La chambre 30 qui n'est pas gonflée, communique avec le milieu extérieur par au moins une ouverture (non représentée) pour permettre à l'air d'entrer ou de sortir du pneumatique semi-creux en assurant sa déformation.

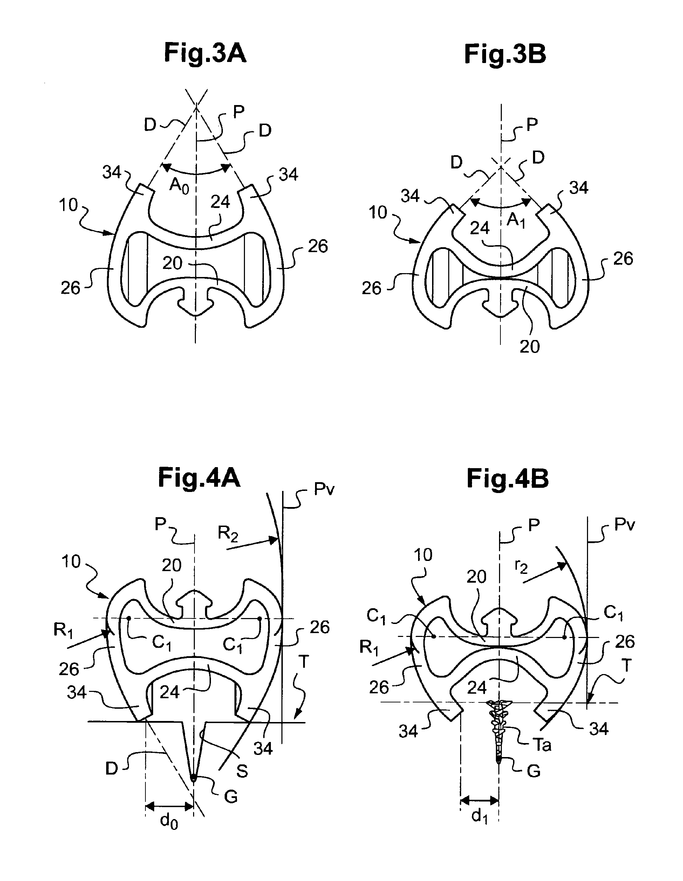

Les flancs 26 sont reliés à deux parties d'extrémité 32 de semelle 20 et sont munis chacun d'une crête annulaire 34. Les deux crêtes 34 prolongent respectivement les deux flancs 26 dans la direction radiale extérieure, c'est-à-dire en s'éloignant de l'axe de révolution XX. Les deux crêtes 34 définissent respectivement deux directions principales D non parallèles, c'est-à-dire qu'elles sont inclinées chacune du même angle par rapport à un plan médian P perpendiculaire à l'axe de révolution XX. Ces deux directions se coupent suivant un angle aigu comme décrit plus loin en référence aux figures 3A et 3B.

Dans l'exemple des figures 1 et 2, chaque flanc 26 et la crête annulaire 34 qui le prolonge ont un profil de forme générale convexe. Ce profil présente un premier rayon de courbure R₁ dans la région du flanc qui se raccorde avec la semelle 20 et un deuxième rayon de courbure R₂, beaucoup plus grand que R₁ dans la région du flanc et de son prolongement avec la crête 34.

Chaque crête annulaire 34 comporte un bord d'extrémité 36 qui est lisse et continu. Ces bords d'extrémité 36 présentent, comme vue en coupe, des pentes respectives symétrique ayant dans l'exemple un angle a de 30° (figure 2).

Chaque flanc 26 présente une épaisseur E₁ sensiblement constante et, de même, la bande de roulement 24 présente une épaisseur E₂ qui est sensiblement égale à E₁ dans l'exemple représenté.

La concavité de la bande de roulement 24 est définie par un rayon R₃ dont la valeur est intermédiaire entre celles des rayons R₁ et R₂. Cette bande de roulement se raccorde intérieurement avec les crêtes selon un arrondi présentant un rayon de raccordement R₄ de valeur inférieure à R₃.

Comme on peut le voir sur la figure 2, chaque crête annulaire a une épaisseur qui diminue progressivement à partir d'une région de raccordement avec la bande de roulement jusqu'à un bord d'extrémité 36 où elle présente une épaisseur minimale E₃.

Cette épaisseur minimale E₃ est ici supérieure à chacune des épaisseurs E₁ et E₂ pour contribuer au renforcement de la crête annulaire.

Il est fait maintenant référence aux figures 3A et 3B.

Comme on peut le voir sur la figure 3A, les crêtes annulaires 34, dans la configuration au repos, c'est-à-dire à l'état non chargé du pneumatique, forment conjointement un angle aigu A₀ par leurs directions principales respectives D. Cela signifie que chaque direction D forme avec le plan principal P un angle égal à ½A₀. Lorsque le pneumatique est chargé (figure 3B), les crêtes annulaires 34 se rapprochent mutuellement et localement dans la direction horizontale, ce qui provoque une déformation de la bande de roulement 24 dont la concavité augmente, c'est-à-dire que le rayon de courbure R₃ (figure 2) diminue.

Il en résulte que la valeur de l'angle passe de la valeur A₀ de la figure 3A à la valeur A₁ de la figure 3B, qui est supérieure à la valeur A₀.

Comme la concavité de la bande de roulement 24 augmente, celle-ci se rapproche de la semelle 20 et peut même venir au contact de cette dernière. Il en résulte également une déformation des flancs 26 conjointement avec les crêtes annulaires 34.

Comme on peut le voir sur les figures 4A et 4B, chaque flanc 26 et la crête annulaire 34 qui le prolonge, sont aptes à pivoter conjointement et localement sous l'effet de la charge autour d'un point de pivotement C₁ situé dans une région de raccordement entre le flanc et la semelle, c'est-à-dire près des extrémités 32 de la semelle 20 (figure 2).

Chacun des points de pivotement C₁ correspond sensiblement au centre du rayon de courbure R₁ mentionné précédemment et représenté sur la figure 2. On peut voir que les deux rayons R₁ restent identiques à l'état non chargé (figure 4A) et à l'état chargé (figure 4B) et que les points de pivotement C₁ restent chacun au même endroit. Par contre le rayon de courbure R₂ décrit précédemment en liaison avec la figure 2 diminue et se transforme pour passer de la valeur R₂ à l'état non chargé pour passer à une valeur r₂ plus faible à l'état chargé, tout en restant tangent à un plan vertical Pv.

On voit sur la figure 4A le profil du pneumatique 10 à l'état non chargé dans lequel les crêtes 34 reposent sur un sol ou terrain T dans lequel a été creusé un sillon S et ont été enfouies ensuite des graines G. Le pneumatique est disposé de telle sorte que son plan de symétrie P soit disposé verticalement dans l'axe du sillon. La distance verticale entre chaque crête (au niveau du point de l'intersection avec la direction D) avec le plan P est égale à d₀.

À l'état chargé, et comme représenté sur la figure 4B, les flancs 26 et les crêtes 34 qui les prolongent se déforment comme expliqué précédemment, si bien que les extrémités des crêtes 34 se rapprochent en provoquant un effet de pincement sur la terre. La distance d₀ de la figure 4 devient la distance d₁ de la figure 4B qui est inférieure à d₀. Autrement dit la bande de roulement 24 et les deux crêtes 34 forment ensemble un profil en U dont le fond s'incurve et dont les deux branches se rapprochent. Grâce à l'effet de pincement des crêtes 34, la terre ameublie qui se trouvait à côté du sillon est enfouie dans celui-ci comme montré par la référence Ta sur la figure 4B.

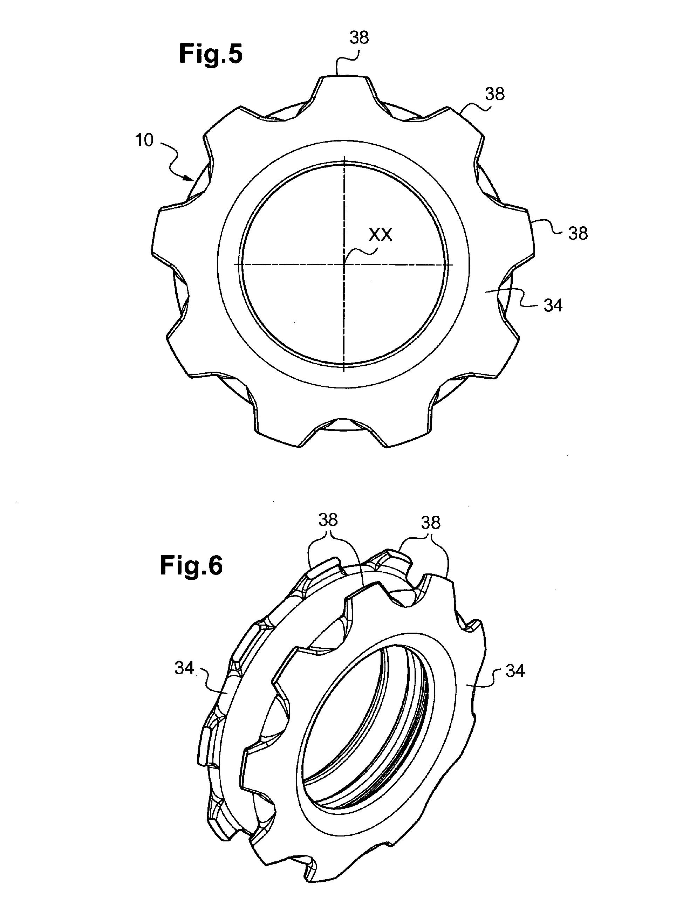

Les figures 5 et 6 montrent une variante de réalisation du pneumatique des figures précédentes dans laquelle le profil, ou section droite, du pneumatique est sensiblement le même que sur la figure 1.

La différence réside ici dans le fait que les crêtes annulaires 34 sont munies chacune à leur périphérie d'indentations 38 sous la forme de dents ou créneaux. Ces indentations sont identiques et régulièrement espacées et au nombre de neuf dans l'exemple représenté. Le nombre de ces indentations pourrait être différent. Ces dents ont dans l'exemple une forme générale trapézoïdale en vue de côté (figure 5).

Comme on peut le voir d'après la figure 6, les indentations 38 des crêtes annulaires respectives 34 sont alignées dans des directions parallèles à l'axe de révolution.

La présence des indentations 38 contribue à faciliter l'évacuation de la terre qui a pu s'accumuler entre les deux crêtes annulaires 36 et permet aussi un meilleur poinçonnement du sol comparativement à des crêtes à bords lisses.

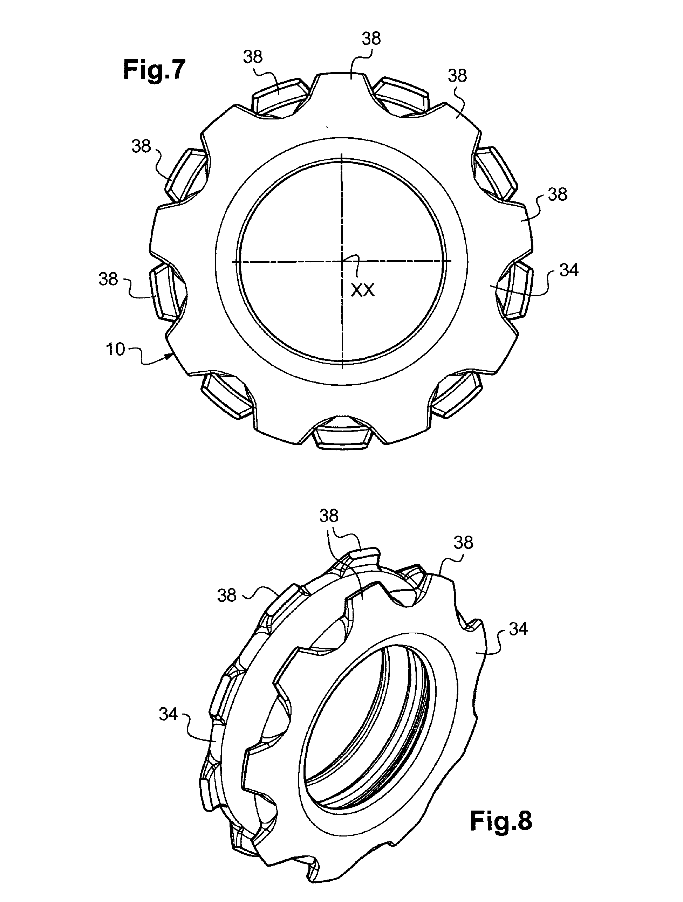

Les figures 7 et 8 montrent une variante de réalisation des figures 5 et 6. Le profil de la section transversale du pneumatique est sensiblement le même que dans la forme de réalisation précédente. La différence réside ici dans le fait que les crêtes annulaires 34 sont munies d'indentations 38, toujours au nombre de neuf dans l'exemple, mais décalées dans des directions parallèles à l'axe de révolution XX.

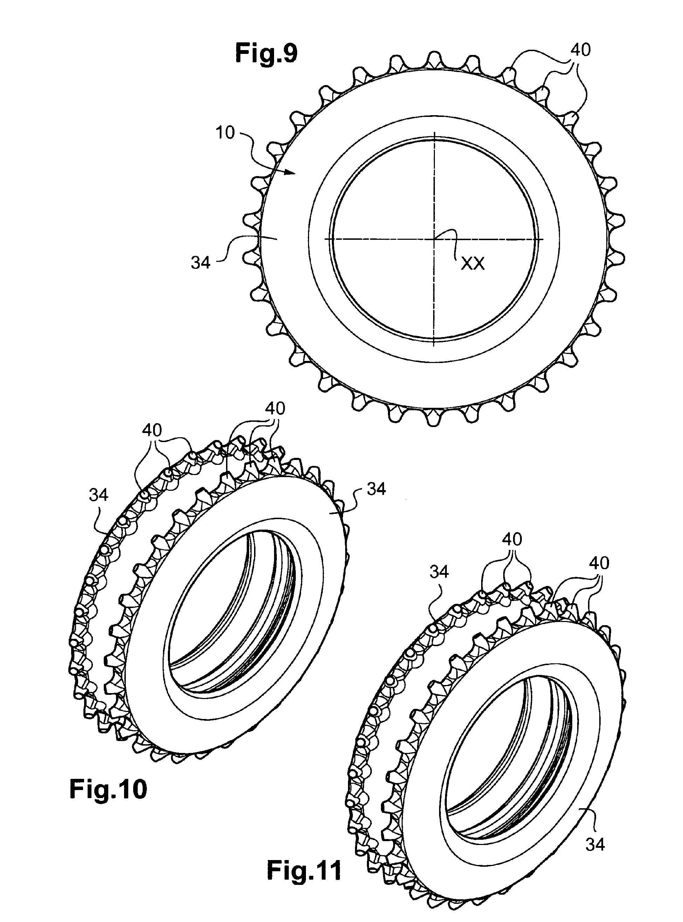

Les figures 9 et 10 montrent une autre variante de réalisation dans laquelle chaque crête annulaire comporte une pluralité d'indentations 40, dans l'exemple au nombre de trente. Toutefois, ces indentations sont réalisées ici sous la forme de picots ou tétines régulièrement espacés et ayant chacune sensiblement la forme d'un tronc de cône. Dans cet exemple de réalisation, les indentations 40 sont alignées dans des directions parallèles à l'axe de révolution XX.

La figure 11 montre une variante de réalisation. Elle diffère de la figure 10 par le fait que les indentations 40, également au nombre de trente, sont ici décalées dans des directions parallèles à l'axe de révolution.

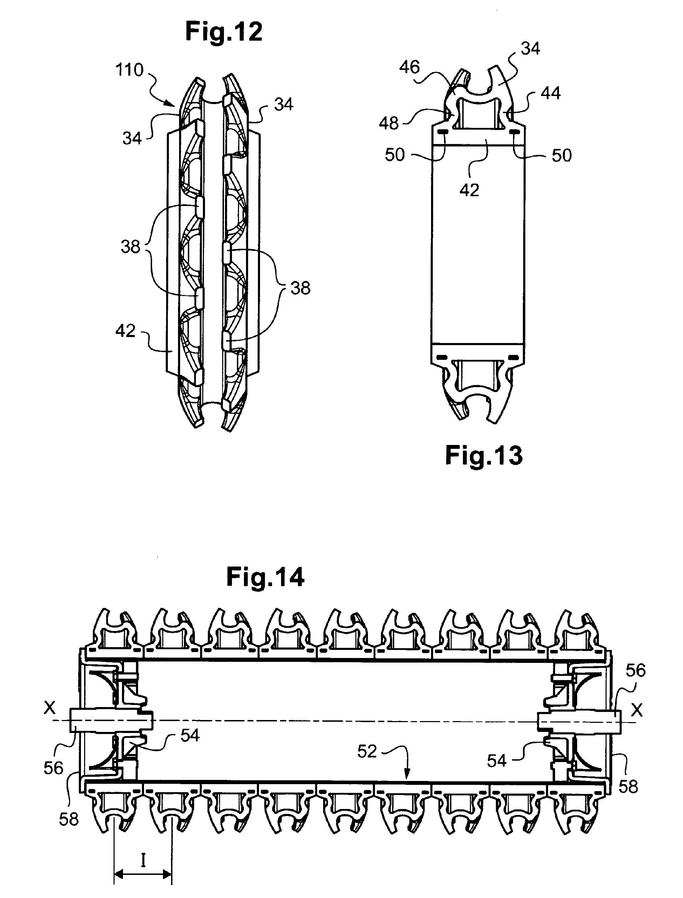

Il est fait maintenant référence aux figures 12 à 14. Dans cette forme de réalisation, le pneumatique 110 comprend une semelle 42 qui présente un profil de forme plane selon un plan passant par l'axe de révolution XX, ce qui permet de définir un manchon ou fourreau cylindrique. Par ailleurs, chaque pneumatique comporte deux flancs 44 avec un profil en forme générale de S selon un plan passant par l'axe de révolution. Ce profil en S comporte une partie extérieure convexe 46 se prolongeant par une crête annulaire 34 et une partie intérieure concave 48 qui est reliée à la semelle 42. Dans l'exemple, chacune des crêtes 34 est pourvue d'indentations 38, en forme de dents trapézoïdales, qui sont décalées dans des directions parallèles à l'axe XX.

Comme on peut le voir sur la figure 13, la semelle 42 incorpore des anneaux de renfort 50 noyés dans la masse du matériau. Ces anneaux sont destinés à assurer une meilleure tenue de la semelle autour d'un support rotatif.

Il est fait maintenant référence à la figure 14 qui montre le montage de plusieurs pneumatiques 110 selon les figures 12 et 13 enfilés autour d'un tube cylindrique 52 pour constituer un rouleau. Ce tube cylindrique 52 est relié à deux joues d'extrémité 54 supportant deux bouts d'arbre 56 disposés co-axialement dans la direction d'un axe XX coïncidant avec l'axe de révolution des pneumatiques. Ces pneumatiques sont enfilés jointivement autour du tube cylindrique 52 et maintenus serrés par deux flasques d'extrémité 58 fixés respectivement sur les deux joues 54.

Cet agencement permet d'assurer simultanément la fermeture de plusieurs sillons parallèles. Les pneumatiques définissent deux à deux un pas ou intervalle I dont la valeur correspond au pas des sillons (non représenté).

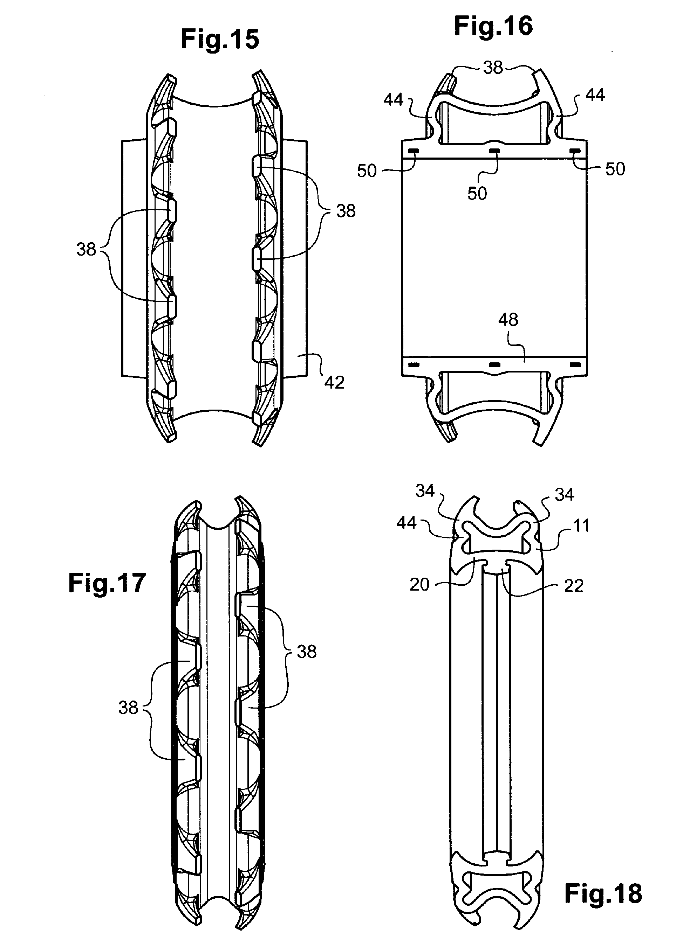

Les figures 15 et 16 montrent une forme de réalisation proche de celle des figures 12 et 13. Comme dans la forme de réalisation précédente, le pneumatique comporte une semelle 42 formant un manchon cylindrique. Les flancs 44 du pneumatique ont également un profil en forme de S comme dans la forme de réalisation précédente. Egalement, les crêtes respectives du pneumatique comportent des indentations 48, ici au nombre de douze, décalées dans des directions parallèles à l'axe de révolution XX.

La principale différence réside ici dans le fait que la semelle 42 en forme de manchon présente une largeur axiale plus importante et que le pneumatique présente également une largeur axiale plus importante.

La semelle 42 incorpore trois anneaux de renfort 50 au lieu de deux dans la forme de réalisation précédente.

Les figures 17 et 18 montrent une autre forme de réalisation dans laquelle le pneumatique comporte deux flancs 44 à profil en S, et dans laquelle les crêtes annulaires 34 comportent chacune des indentations 38 décalées dans des directions parallèles à l'axe de révolution. Ces indentations sont présentes au nombre de douze.

Ici, le pneumatique est destiné à un montage individuel sur une jante analogue à celle représentée sur la figure 1. À cet effet, le pneumatique comporte une semelle 20 présentant un profil analogue à celui montré sur la figure 1, cette semelle étant également munie d'un talon 22.

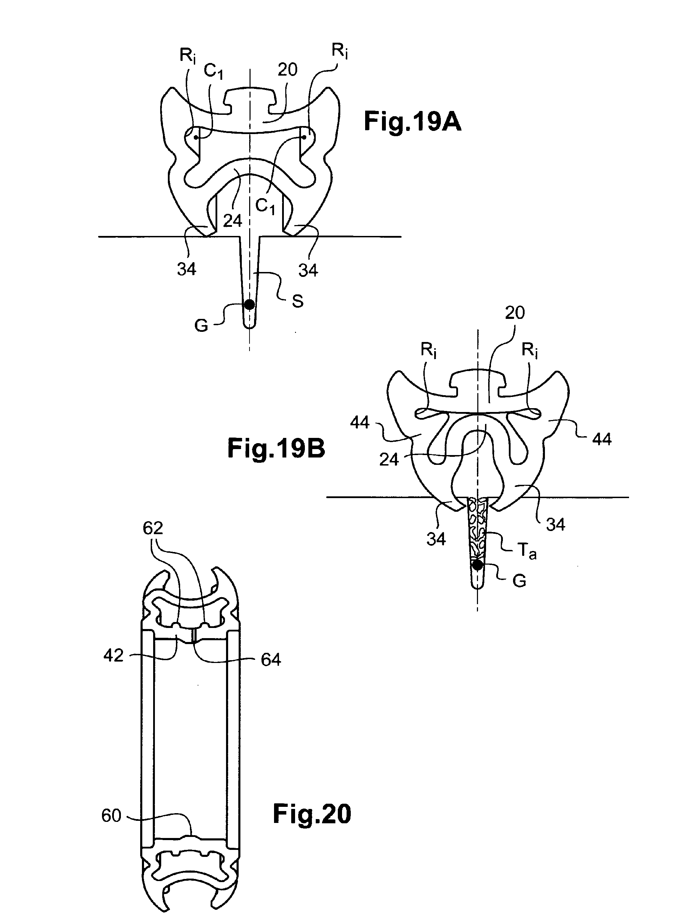

Les figures 19A et 19B montrent le profil du pneumatique des figures 17 et 18 respectivement à l'état non chargé et à l'état chargé au-dessus d'un sillon S dans lequel ont été enfouies des graines G. Dans le cas de la figure 19A, le profil du pneumatique n'est pas déformé et les crêtes annulaires 34 viennent se placer de part et d'autre de l'axe du sillon dans lequel ont été enfouies les graines. Le plan principal du pneumatique correspond sensiblement avec l'axe du sillon.

Sur la figure 19B, on voit que le pneumatique se déforme localement sous l'effet de la charge. Les crêtes annulaires se rapprochent 34 dans la direction horizontale pour exercer un effet de pincement et combler le sillon avec de la terre ameublie Ta comme dans le cas de la figure 4B. On voit que le profil en S des flancs 44 a tendance à s'écraser et que la bande de roulement 24 se déforme également en augmentant sa concavité. Ici la bande de roulement 24 vient au contact de la semelle 20, de même que la partie intérieure du profil en S.

Le point de pivotement de chacun des flancs 44 correspond au centre C₂ du rayon de courbure intérieur Rᵢ dans la région du raccordement du flanc 44 et de la semelle 20. Ce rayon de courbure diminue en passant de l'état non chargé à l'état chargé.

La figure 20 montre une autre forme de réalisation dans laquelle le pneumatique comprend également des flancs 44 à profil en S et dans laquelle les crêtes annulaires 34 sont pourvues d'indentations 38 décalées. La principale différence par rapport à la forme de réalisation des figures 17 et 18 réside dans le fait que la semelle 42 forme ici un fourreau pour le montage sur une jante de structure différente. La semelle porte une nervure annulaire médiane 60 dirigée du côté intérieur. Du côté opposé, c'est-à-dire du côté de la chambre intérieure, la semelle 42 comporte deux nervures annulaires 62 destinées à former des butées pour limiter l'écrasement du pneumatique. On voit également sur la figure 20 que la semelle est traversée, dans son épaisseur, par un trou 64 servant au passage de l'air, de manière en soi connue. Ce trou est réalisé au moment de la fabrication du pneumatique. Il est présent dans tous les pneumatiques de l'invention, comme déjà mentionné.

Le pneumatique de l'invention est susceptible de nombreuses variantes de réalisation pour ce qui concerne son profil, c'est-à-dire la forme de sa section transversale. On comprendra que les nervures annulaires du pneumatique peuvent être lisses ou pourvues d'indentations décalées ou non. La semelle qui fait partie du pneumatique sera adaptée en fonction du montage souhaité, soit sur une jante, soit sur un rouleau.

Le pneumatique de l'invention est réalisé en matériau élastomère, avantageusement du type caoutchouc.

La dureté du pneumatique est choisie pour lui conférer suffisamment de raideur. Généralement, on préférera une dureté Shore comprise entre 50 et 70.

Le pneumatique de l'invention peut être réalisé par différents procédés en eux-mêmes connus pour la fabrication des pneumatiques semi-creux. Il peut être réalisé par extrusion d'un boudin sectionné à la longueur voulue, ce boudin étant ensuite mis en forme circulaire et réuni par ses extrémités. Ce boudin en forme circulaire peut être alors placé à l'intérieur d'un moule approprié, par exemple d'un moule à plusieurs sections, pour lui conférer la forme choisie.

Il est possible également de faire appel à un procédé d'injection notamment par roto-moulage.

Le pneumatique de l'invention s'applique aux machines agricoles, notamment aux machines du type semoir, ou encore aux machines de distribution d'engrais, fertilisants ou analogues à enfouir dans le sol.

## Revendications

1. Pneumatique semi-creux pour machine agricole, présentant un axe de révolution (XX) et comprenant une semelle (20 ; 42) propre à être montée à la périphérie d'un support rotatif (12 , 52), une bande de roulement (24) opposée à la semelle (20 ; 42) et deux flancs (26 ; 44) reliant chacun la semelle (20 ; 42) et la bande de roulement (24), de manière à former ensemble une enveloppe (28) définissant une chambre (30) non gonflée à l'intérieur du pneumatique, **caractérisé en ce que** la bande de roulement (24) présente un profil concave selon un plan passant par l'axe de révolution (XX), et **en ce que** le pneumatique comporte deux crêtes annulaires (34) qui prolongent respectivement les deux flancs (26) dans la direction radiale extérieure et qui se raccordent respectivement à deux extrémités opposées (32) de la bande de roulement (24), les deux crêtes annulaires (34) définissant respectivement deux directions principales (D) se coupant suivant un angle aigu (A), en sorte que lorsque le pneumatique vient au contact d'un sol, en étant soumis à une charge verticale, les deux crêtes annulaires (34) se rapprochent localement de manière à exercer un effet de pincement sur le sol, provoquant une augmentation de la concavité de la bande de roulement (24) et une augmentation de l'angle (A).

2. Pneumatique semi-creux selon la revendication 1, **caractérisé en ce que** chaque flanc (26 ; 44) et la crête annulaire (34) qui le prolonge sont aptes à pivoter conjointement et localement sous l'effet de la charge verticale autour d'un point de pivotement (C₁ ; C₂) situé dans une région de raccordement entre le flanc (26) et la semelle (20 ; 42).

3. Pneumatique semi-creux selon l'une des revendications 1 et 2, **caractérisé en ce que** chaque flanc (26) et la crête annulaire (34) qui le prolonge ont un profil de forme générale convexe selon un plan passant par l'axe de révolution (XX).

4. Pneumatique semi-creux selon l'une des revendications 1 et 2, **caractérisé en ce que** chaque flanc (44) a un profil en forme générale de S, selon un plan passant par l'axe de révolution (XX), ce profil en S comportant une partie extérieure convexe (46) se prolongeant par une crête annulaire (34) et une partie intérieure concave (48) reliée à la semelle (20 ; 42).

5. Pneumatique semi-creux selon l'une des revendications 1 à 4, **caractérisé en ce que** chaque crête annulaire (34) a une épaisseur qui diminue progressivement à partir d'une région de raccordement avec la bande de roulement (24) jusqu'à un bord d'extrémité (36) de la crête annulaire où elle présente une épaisseur minimale (E₃).

6. Pneumatique semi-creux selon l'une des revendications 1 à 5, **caractérisé en ce que** chaque flanc (26 ; 44) présente une épaisseur (E₁) sensiblement constante.

7. Pneumatique semi-creux selon l'une des revendications 1 à 6, **caractérisé en ce que** chaque crête annulaire (34) comporte un bord d'extrémité (36) lisse et continu.

8. Pneumatique semi-creux selon la revendication 7, **caractérisé en ce que** chaque crête annulaire (34) comporte des indentations (38 ; 40).

9. Pneumatique semi-creux selon la revendication 8, **caractérisé en ce que** les indentations sont réalisées sous la forme de dents ou de créneaux (38) de forme sensiblement trapézoïdale.

10. Pneumatique semi-creux selon la revendication 8, **caractérisé en ce que** les indentations sont réalisées sous la forme de picots (40) ayant sensiblement la forme de troncs cylindriques.

11. Pneumatique semi-creux selon l'une des revendications 8 à 10, **caractérisé en ce que** les indentations (38 ; 40) des crêtes annulaires respectives (34) sont alignées dans des directions parallèles à l'axe de révolution (XX).

12. Pneumatique semi-creux selon l'une des revendications 8 à 10, **caractérisé en ce que** les indentations (38 ; 40) des crêtes annulaires respectives (34) sont décalées dans des directions parallèles à l'axe de révolution (XX).

13. Pneumatique semi-creux selon l'une des revendications 1 à 12, **caractérisé en ce que** chaque semelle (20) présente un profil de forme concave selon un plan passant par l'axe de révolution (XX) et est munie d'un talon de retenue (22) qui fait saillie dans la direction radiale intérieure.

14. Pneumatique semi-creux selon l'une des revendications 1 à 12, **caractérisé en ce que** chaque semelle (42) présente un profil de forme plane selon un plan passant par l'axe de révolution (XX), pour définir un manchon cylindrique.

15. Pneumatique semi-creux selon l'une des revendications 1 à 14, **caractérisé en ce que** le pneumatique est formé à partir d'un matériau élastomère, en particulier d'un caoutchouc.

16. Pneumatique semi-creux selon la revendication 15, **caractérisé en ce que** le matériau élastomère a une dureté comprise entre 50 et 70 Shore.

## Patentansprüche

1. Halbhohlreifen für eine Landwirtschaftsmaschine, der eine Umlaufachse (XX) aufweist und eine Sohle (20; 42), die sich dazu eignet, am Umfang einer Drehhalterung (12, 52) montiert zu werden, eine Lauffläche (24), die der Sohle (20; 42) entgegengesetzt ist, und zwei Flanken (26; 44) umfasst, die jeweils die Sohle (20; 42) und die Lauffläche (24) verbinden, um zusammen eine Hülle (28) zu bilden, die eine nicht aufgeblasene Kammer (30) im Inneren des Reifens definiert, **dadurch gekennzeichnet, dass** die Lauffläche (24) ein konkaves Profil in einer Ebene hat, die durch die Umlaufachse (XX) verläuft, und dass der Reifen zwei ringmäßige Spitzen (34) hat, die jeweils die zwei Flanken (26) in der radialen Außenrichtung verlängern, und die sich jeweils an zwei entgegengesetzten Enden (32) der Lauffläche (24) verbinden, wobei die zwei ringmäßigen Spitzen (34) jeweils zwei Hauptrichtungen (D) definieren, die sich entlang eines spitzen Winkels (A) schneiden, so dass, wenn der Reifen mit dem Boden in Kontakt kommt und dabei einer vertikalen Belastung ausgesetzt wird, die zwei ringmäßigen Spitzen (34) sich lokal annähern, um eine Klemmwirkung auf den Boden auszuüben, wodurch eine Vergrößerung der Konkavität der Lauffläche (24) und eine Vergrößerung des Winkels (A) hervorgerufen wird.

2. Halbhohlreifen nach Anspruch 1, **dadurch gekennzeichnet, dass** jede Flanke (26; 44) und die ringmäßige Spitze (34), die sie verlängert, sich zusammen und lokal unter der Einwirkung der vertikalen Belastung um einen Schwenkpunkt (C₁; C₂) verschwenken können, der sich in einem Verbindungsbereich zwischen der Flanke (26) und der Sohle (20; 42) befindet.

3. Halbhohlreifen nach einem der Ansprüche 1 und 2, **dadurch gekennzeichnet, dass** jede Flanke (26) und die ringmäßige Spitze (34), die sie verlängert, ein Profil mit einer allgemein konvexen Form in einer Ebene aufweisen, die durch die Umlaufachse (XX) verläuft.

4. Halbhohlreifen nach einem der Ansprüche 1 und 2, **dadurch gekennzeichnet, dass** jede Flanke (44) ein allgemein S-förmiges Profil in einer Ebene hat, die durch die Umlaufachse (XX) verläuft, wobei dieses S-Profil ein konvexes Außenteil (46), das sich durch eine ringmäßige Spitze (34) verlängert, und ein konkaves Innenteil (48) aufweist, das mit der Sohle (20; 42) verbunden ist.

5. Halbhohlreifen nach einem der Ansprüche 1 bis 4, **dadurch gekennzeichnet, dass** jede ringmäßige Spitze (34) eine Dicke hat, die ausgehend von einem Verbindungsbereich mit der Lauffläche (24) bis zu einem Außenrand (36) der ringmäßigen Spitze nach und nach kleiner wird, an dem sie eine Mindestdicke (E₃) aufweist.

6. Halbhohlreifen nach einem der Ansprüche 1 bis 5, **dadurch gekennzeichnet, dass** jede Flanke (26; 44) eine im Wesentliche konstante Dicke (E₁) aufweist.

7. Halbhohlreifen nach einem der Ansprüche 1 bis 6, **dadurch gekennzeichnet, dass** jede ringmäßige Spitze (34) einen glatten und durchgehenden Außenrand (36) hat.

8. Halbhohlreifen nach einem der Ansprüche 1 bis 7, **dadurch gekennzeichnet, dass** jede ringmäßige Spitze (34) Einkerbungen (38; 40) hat.

9. Halbhohlreifen nach Anspruch 8, **dadurch gekennzeichnet, dass** die Einkerbungen in Form von im Wesentlichen trapezförmigen Zähnen oder Zacken (38) hergestellt sind.

10. Halbhohlreifen nach Anspruch 8, **dadurch gekennzeichnet, dass** die Einkerbungen in Form von Spitzkeilen (40) hergestellt sind, die im Wesentlichen die Form von Zylinderstümpfen haben.

11. Halbhohlreifen nach einem der Ansprüche 8 bis 10, **dadurch gekennzeichnet, dass** die Einkerbungen (38; 40) der jeweiligen ringmäßigen Spitzen (34) in den zur Umlaufachse (XX) parallelen Richtungen ausgerichtet sind.

12. Halbhohlreifen nach einem der Ansprüche 8 bis 10, **dadurch gekennzeichnet, dass** die Einkerbungen (38; 40) der jeweiligen ringmäßigen Spitzen (34) in den zur Umlaufachse (XX) parallelen Richtungen versetzt sind.

13. Halbhohlreifen nach einem der Ansprüche 1 bis 12, **dadurch gekennzeichnet, dass** jede Sohle ein Profil mit konkaver Form in einer Ebene aufweist, die durch die Umlaufachse (XX) verläuft und mit einem Halteabsatz (22) versehen ist, der in der radialen Innenrichtung vorsteht.

14. Halbhohlreifen nach einem der Ansprüche 1 bis 12, **dadurch gekennzeichnet, dass** jede Sohle (42) ein Profil mit ebener Form in einer Ebene aufweist, die durch die Umlaufachse (XX) verläuft, um eine zylindrische Hülse zu definieren.

15. Halbhohlreifen nach einem der Ansprüche 1 bis 14, **dadurch gekennzeichnet, dass** der Reifen aus einem Elastomermaterial, insbesondere aus Gummi hergestellt ist.

16. Halbhohlreifen nach Anspruch 15, **dadurch gekennzeichnet, dass** das Elastomermaterial eine Härte hat, die zwischen 50 und 70 Shore beträgt.

## Claims

1. A semi-hollow pneumatic tire for an agricultural machine, having an axis of revolution (XX) and comprising a sole (20; 42) capable of being mounted on the periphery of a rotary support (12, 52), a tread (24) opposite the sole (20; 42), and two sidewalls (26; 44) each connecting the sole (20; 42) and the tread (24) so as to form together a cover (28) which defines an uninflated chamber (30) inside the pneumatic tire, **characterised in that** the tread (24) has a concave profile according to a plane passing through the axis of revolution (XX), and wherein the pneumatic tire comprises two annular ridges (34) which extend, respectively, the two sidewalls (26) in the outer radial direction and which are connected to two opposite ends (32) of the tread (24), the two annular ridges (34) defining, respectively, two principal directions (D) which intersect at an acute angle (A) so that, when the pneumatic tire comes into contact with soil, by being subjected to a vertical load, the two annular ridges (34) move closer together locally in such a manner as to exert a pinching effect on the soil, causing an increase in the concavity of the tread (24) and an increase in the angle (A).

2. The semi-hollow pneumatic tire as claimed in claim 1, **characterised in that** each sidewall (26; 44) and the annular ridge (34) that extends it are capable of pivoting jointly and locally under the effect of the vertical load about a pivot point (C₁; C₂) situated in a connection region between the sidewall (26) and the sole (20; 42).

3. The semi-hollow pneumatic tire as claimed in either claim 1 or claim 2, **characterised in that** each sidewall (26) and the annular ridge (34) that extends it have a profile of generally convex shape according to a plane passing through the axis of revolution (XX).

4. The semi-hollow pneumatic tire as claimed in either claim 1 or claim 2, **characterised in that** each sidewall (44) has a generally S-shaped profile, according to a plane passing through the axis of revolution (XX), the S-shaped profile having a convex outer portion (46), which is extended by an annular ridge (34), and a concave inner portion (48), which is connected to the sole (20; 42).

5. The semi-hollow pneumatic tire as claimed in any one of claims 1 to 4, **characterised in that** each annular ridge (34) has a thickness which decreases gradually starting from a connection region with the tread (24) to an end edge (36) of the annular ridge, where it has a minimal thickness (E₃).

6. The semi-hollow pneumatic tire as claimed in any one of claims 1 to 5, **characterised in that** each sidewall (26; 44) has a substantially constant thickness (E₁).

7. The semi-hollow pneumatic tire as claimed in any one of claims 1 to 6, **characterised in that** each annular ridge (34) has a smooth and continuous end edge (36).

8. The semi-hollow pneumatic tire as claimed in claim 7, **characterised in that** each annular ridge (34) comprises indentations (38; 40).

9. The semi-hollow pneumatic tire as claimed in claim 8, **characterised in that** the indentations are produced in the form of teeth or of notches (38) of substantially trapezoidal shape.

10. The semi-hollow pneumatic tire as claimed in claim 8, **characterised in that** the indentations are produced in the form of spikes (40) having substantially the shape of cylindrical section.

11. The semi-hollow pneumatic tire as claimed in any one of claims 8 to 10, **characterised in that** the indentations (38; 40) of each annular ridge (34) are aligned in directions parallel to the axis of revolution (XX).

12. The semi-hollow pneumatic tire as claimed in any one of claims 8 to 10, **characterised in that** the indentations (38; 40) of each annular ridge (34) are offset in directions parallel to the axis of revolution (XX).

13. The semi-hollow pneumatic tire as claimed in any one of claims 1 to 12, **characterised in that** each sole (20) has a profile of concave shape according to a plane passing through the axis of revolution (XX) and is provided with a retaining bead (22) which projects in the inner radial direction.

14. The semi-hollow pneumatic tire as claimed in any one of claims 1 to 12, **characterised in that** each sole (42) has a profile of planar shape according to a plane passing through the axis of revolution (XX), in order to define a cylindrical sleeve.

15. The semi-hollow pneumatic tire as claimed in any one of claims 1 to 14, **characterised in that** the pneumatic tire is formed from an elastomer material, in particular from a rubber.

16. The semi-hollow pneumatic tire as claimed in claim 15, **characterised in that** the elastomer material has a hardness of between 50 and 70 Shore.
